Europäisches Patentamt

European Patent Office

Office européen des brevets

(11) Publication number: **0 068 688**
A2

# EUROPEAN PATENT APPLICATION

(21) Application number: 82303025.9

(22) Date of filing: **11.06.82**

(51) Int. Cl.³: **F 02 M 31/12**

(30) Priority: **15.06.81 US 274010**

(43) Date of publication of application: **05.01.83**
Bulletin 83/1

(84) Designated Contracting States: **AT BE CH DE FR IT LI
NL SE**

(71) Applicant: **RAYCHEM CORPORATION, 300 Constitution
Drive, Menlo Park California 94025 (US)**

(72) Inventor: **Walty, Robert Joseph, 617, Third Avenue,
Redwood City California 94036 (US)**
Inventor: **Marshall, Larry James, 1391, Woodland
Avenue, Menlo Park California 94025 (US)**

(74) Representative: **Dlugosz, Anthony Charles et al,
Raychem Limited Patent & Legal Department Faraday
Road Dorcan, Swindon SN3 5HH Wiltshire (GB)**

(54) Fuel line heater feedthrough.

(57) A fuel feedthrough and heating assembly comprises
a fuel conduit and a neck portion through which a self-
regulating PTC heater is introduced into the fuel conduit.
A seal prevents fuel from exiting through the neck por-
tion, and the connections between the electrical leads
to the heater and the conductors of the heater are en-
capsulated within the neck portion by a fuel-resistant
insulating composition. The assembly is particularly use-
ful for heating diesel fuel, e.g. in vehicles and locomo-
tives.

This invention relates to apparatus suitable for use in heating fuels, particularly diesel fuel.

If diesel fuel becomes too cold, higher molecular weight hydrocarbons therein can solidify, causing "clouding" of the fuel. These solids can block the pores of a fuel filter through which the fuel is pumped, causing the engine to lose power (or stop) or preventing the engine from starting. In order to prevent this, various methods have been proposed for heating diesel fuel before it reaches the filter. Reference may be made for example to U.S. Patents Nos. 3,935,901, 3,989,019 and 4,091,265, Canadian Patent No. 952,388 and U.K. Patent No. 1,568,503.

This invention relates to a feedthrough and heating assembly which makes it possible to insert a self-regulating conductive polymer heater directly into a fuel line just before the fuel is pumped through a filter. According to the invention, there is provided a fuel feedthrough and heating assembly which can be positioned and connected between a fuel filter and a fuel tank of a fuel supply system to provide means for heating fuel which is being pumped through a fuel line from the fuel tank to the fuel filter, said feedthrough and heating assembly comprising

(A) a feedthrough comprising

    (i) a fuel conduit having at one end thereof a fuel line connector for connecting the feedthrough to a fuel line and at the other end thereof a fuel filter connector for connecting the feedthrough to a fuel filter; and

(ii)    a neck portion which protrudes from the fuel conduit between the ends thereof and which comprises a chamber;

(B)    a flexible self-limiting strip heater comprising

(i)    a conductive polymer element which is composed of a PTC conductive polymer composition;

(ii)    at least two electrodes which can be connected to a source of electrical power and which when so connected cause current to flow through said element; and

(iii)    a fuel-resistant insulating jacket surrounding the electrodes and the conductive polymer element;

one end of the strip heater being within the chamber of the neck portion, and the strip heater passing through the fuel line connector and protruding from the fuel conduit;

(C)    insulated electrical leads connected to the electrodes of said heater, the connections lying within the chamber of the neck portion;

(D)    a mass of fuel-resistant, water-resistant and insulating composition which encapsulates (i) the connections between the electrodes and the leads (ii) the insulation at the ends of the connected electrical leads and (iii) the insulating jacket at the end of the connected heater; and

(E)     a fuel-resistant gasket which prevents fuel
        which is being pumped through the fuel conduit
        from exiting through the neck portion.


The assemblies of the invention are particularly useful for fitting to the fuel supply systems of cars, trucks, tractors, locomotives, and other wheeled and tracked vehicles, but can also be used in the fuel supply systems of diesel engines of all kinds, and in other fuel systems where it is desirable to heat the fuel before it passes through a filter. The use of a self-regulating conductive polymer heater offers the great advantage that the fuel cannot be overheated, and immersion of the heater directly in the fuel ensures maximum thermal efficiency. However, direct immersion of the heater also brings with it increased danger if the heater should suffer from what is known as a "wet wire fire". If moisture accumulates adjacent the electrodes of a conductive polymer heater, arcing can take place and such arcing can spread down the whole length of the heater. Under normal conditions of use of conductive polymer heaters, the likelihood of a wet wire fire at the powered end of the heater can be reduced to a very low level by known installation and inspection techniques. However, such known techniques are not adequate if the heater is installed in a vehicle which may be used in a wide variety of uncontrolled conditions (in particular a wide variety of atmospheric conditions accompanied by vibration) by operators and repairmen who cannot be expected constantly to remember the importance of ensuring that moisture is excluded from the termination of the heater (i.e. the region where the electrodes of the heater are joined to the electrical leads which connect the heater to the power supply).

The novel assemblies of the present invention not only provide a convenient way of introducing a self-regulating heater into a fuel supply system, but do so in a manner which substantially eliminates the possibility that moisture can accumulate at the termination of the heater, whether by direct deposition or by wicking along an exposed electrical lead. Thus the mass of fuel-resistant, water-resistant and insulating composition completely encapsulates the areas in which moisture ingress might otherwise occur. The self-regulating characteristic of the heater makes such encapsulation possible without excessive generation of heat.

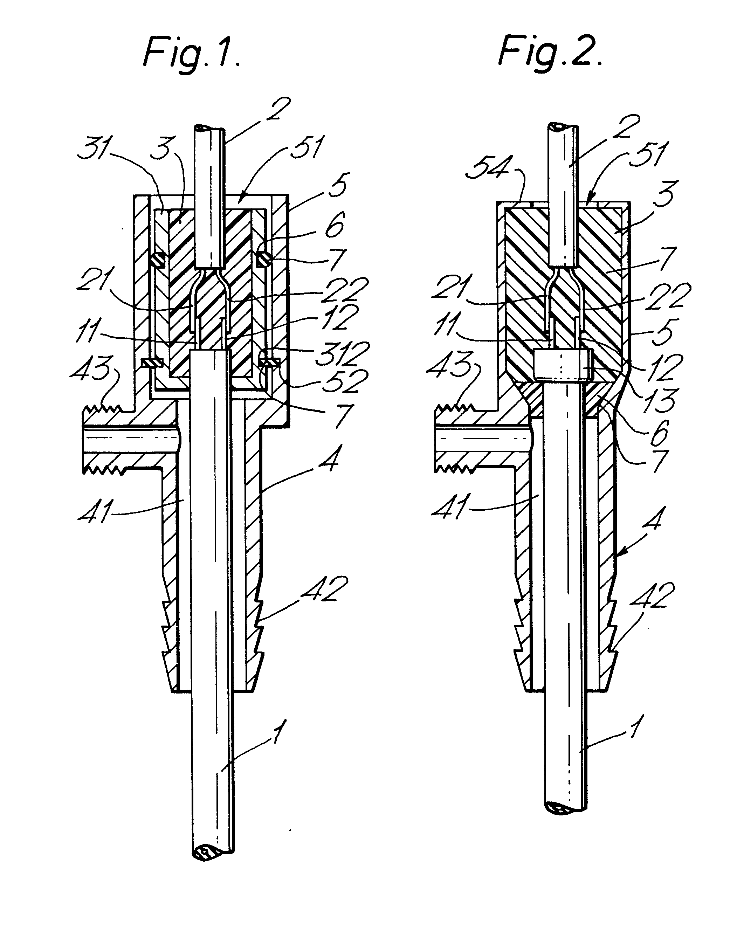

In one embodiment of the invention, as illustrated for example in Figure 1, the heater termination is encapsulated in a mass of fuel-resistant, water-resistant and insulating composition which is, or which forms part of, a member which is a sliding fit in the chamber of the neck portion of the feedthrough. Preferably the assembly comprises a gasket, e.g. an elastomeric O-ring, which provides a seal between the member and the wall of the chamber. The gasket can be seated in a gasket socket in either the member or the wall of the chamber. Preferably the sliding member and/or the chamber is fitted with retaining means, e.g. an expanding ring, for retaining the member at a desired position; the retaining means can be such that disassembly is impossible, so as to ensure that the heater assembly, once assembled, cannot be tampered with.

In another embodiment, as illustrated for example in Figure 2, the chamber comprises a gasket socket at the end of the chamber adjacent the fuel conduit; the gasket forms a seal between the heater and the gasket socket; and the mass of fuel-resistant, water-resistant and insulating composition is a polymeric potting compound which has been cured after being poured into the chamber.

It is preferred that the novel assembly be such that the strip heater is not substantially bent, since this can cause damage to the heater.

The strip heater can be of any kind which will withstand exposure to the fuel but in case the outer insulating jacket of the heater should become damaged, the PTC conductive polymer is preferably one which is not damaged by exposure to the fuel, for example a composition based on polyvinylidene fluoride. The polyvinylidene fluoride is preferably a homopolymer of vinylidene fluoride, but the presence of small quantities of comonomers, (preferably less than 15%, particularly less than 5% by weight), eg. tetrafluoroethylene, hexafluoropropylene and ethylene, is not excluded. The polyvinylidene fluoride is preferably the sole crystalline polymer in the composition, but other crystalline polymers, eg. other crystalline fluoropolymers, may also be present. The composition may contain relatively small amounts (preferably less than 35%, especially less than 20%, particularly less than 10%, by volume) of one or more elastomeric polymers, particularly solvent-resistant fluorine-containing elastomers and acrylic elastomers, which are usually added primarily to improve the flexibility and elongation of the composition.

The particulate conductive filler in the PTC composition preferably comprises carbon black, and often consists essentially of carbon black. Choice of the carbon black will influence the resistivity/ temperature characteristics of the composition.

A carbon black having a ratio of surface area ($m^2$/g) to particle size (mu) of 0.03 to 6.0 is preferred. The amount of conductive filler used will depend upon the desired resistivity of the composition. For flexible strip heaters which are to be used for heating diesel fuel and powered by a 12 volt battery, we prefer a PTC composition whose resistivity is less than 200 ohm.cm eg. about 10 to about 100 ohm.cm. In such compositions the amount of carbon black may for example be 16 to 25% by weight.

The compositions may also comprise other conventional additives, such as non-conductive fillers (including flame retardants) and antioxidants. The compositions may be cross-linked, eg. by irradiation.

When an assembly of the invention is in use, the remote end of the heater is generally immersed in the fuel to be heated. A conventional heat-shrunk end cap can be used to prevent the fuel from gaining access to the conductive polymer composition at a cut end. However, it is preferred, in order to ensure that there is no arcing or short-circuiting at the remote end, that the remote end has been sealed by extrusion of the conductive polymer composition so that it encapsulates the ends of the conductors of the heater, as described and claimed in the accompanying application claiming priority from U.S. Patent Application Serial No. 273,525 (MPO775).

Referring now to the drawing, Figures 1 and 2 each shows a PTC conductive polymer heater 1 comprising conductors 11 and 12 which are joined to conductors 21 and 22 respectively of insulated cable 2. The joints are encap-

0068688
MP0776

sulated within a mass 3 of a fuel-resistant, water-resistant and insulating composition which has been poured around the joints in liquid form and then cured. The heater is sealed into a feedthrough 4 comprising a fuel conduit 41 having at one end thereof a fuel line connector 42 and at the other end thereof a fuel filter connector 43, with the heater protruding from the fuel conduit 41 through the fuel line connector 42. The feedthrough also comprises a neck portion 5 having a chamber 51 which contains the insulating mass 3.

Referring now to Figure 1, the insulating mass 3 is contained within a body 31 which is a sliding fit in chamber 51 and which comprises a peripheral gasket socket 6 in which there is seated a gasket 7 which seals the gap between the body 31 and the wall of chamber 51. The body 31 also comprises a second peripheral channel 312 in which there is seated snap ring 7 which engages channel 52 in the wall of chamber 51 and prevents the body 31 from being withdrawn.

Referring now to Figure 2, the base of chamber 51 is a gasket socket 6 in which there is seated a gasket socket 7. The heater 1 is provided with a collar 13 which bears on the gasket 7 and prevents the heater from being withdrawn. The mass 3 of insulating material fills the chamber 51 and lip 54 prevents withdrawal of the mass 3.

CLAIMS

1.    A fuel feedthrough and heating assembly which can be positioned and connected between a fuel filter and a fuel tank of a fuel supply system to provide means for heating fuel which is being pumped through a fuel line from the fuel tank to the fuel filter, characterized in that said feedthrough and heating assembly comprises

    (A)    a feedthrough comprising

        (i)    a fuel conduit having at one end thereof a fuel line connector for connecting the feedthrough to a fuel line and at the other end thereof a fuel filter connector for conecting the feedthrough to a fuel filter; and

        (ii)    a neck portion which protrudes from the fuel conduit between the ends thereof and which  comprises a chamber;

    (B)    a flexible self-limiting strip heater comprising

        (i)    a conductive polymer element which is composed of a PTC conductive polymer composition;

        (ii)    at least two electrodes which can be connected to a source of electrical power and which when so connected cause current to flow through said element; and

    (iii)   a fuel-resistant insulating jacket surrounding the electrodes and the conductive polymer element;

one end of the strip heater being within the chamber of the neck portion, and the strip heater passing through the fuel line connector and protruding from the fuel conduit;

(C)   insulated electrical leads connected to the electrodes of said heater, the connections lying within the chamber of the neck portion;

(D)   a mass of fuel-resistant, water-resistant and insulating composition which encapsulates (i) the connections between the electrodes and the leads (ii) the insulation at the ends of the connected electrical leads and (iii) the insulating jacket at the end of the connected heater; and

(E)   a fuel-resistant gasket which prevents fuel which is being pumped through the fuel conduit from exiting through the neck portion.

2.   An assembly according to Claim 1 characterized by comprising a member which is a sliding fit in said chamber and which comprises said mass of fuel-resistant, water-resistant and insulating composition.

3.   An assembly according to Claim 2 characterized by comprising retaining means for retaining said member within said chamber after sliding it therein.

0068688

4.    An assembly according to Claim 2 or 3 characterized in that said member comprises a gasket socket in which said gasket is seated, the gasket providing a seal between said member and the wall of the chamber.

5.    An assembly according to claim 2, 3 or 4 characterized in that said chamber has a gasket socket in the wall thereof, and the gasket is seated in the gasket socket and provides a seal between said member and the wall of the chamber.

6.    An assembly according to Claim 1 characterized in that the chamber comprises a gasket socket at the end of the chamber adjacent the fuel conduit, the gasket forms a seal between the heater and the gasket socket, and the mass of fuel-resistant, water-resistant and insulating composition is a polymeric potting compound which has been cured after being poured into the chamber.

7.    An assembly according to any one of claims 1 to 6 characterized in that the PTC conductive polymer is based on polyvinylidene fluoride.

8.    An assembly according to any one of claims 1 to 7 characterized in that the other end of the strip heater has been sealed by the extrusion of the conductive polymer element to cover the ends of the electrodes.

0068688

## Fig.1.

## Fig.2.